## Europäisches Patentamt
## European Patent Office
## Office européen des brevets

(11) Publication number: **0 158 131**
**B1**

# EUROPEAN PATENT SPECIFICATION

(45) Date of publication of patent specification: **26.10.88**

(51) Int. Cl.⁴: **H 04 Q 11/04**

(21) Application number: **85102722.7**

(22) Date of filing: **09.03.85**

(54) Digital line termination unit command interface.

(30) Priority: **16.03.84 GB 8406870**

(43) Date of publication of application:
**16.10.85 Bulletin 85/42**

(45) Publication of the grant of the patent:
**26.10.88 Bulletin 88/43**

(84) Designated Contracting States:
**DE FR IT SE**

(56) References cited:
**EP-A-0 075 310**
**EP-A-0 093 523**
**GB-A-2 063 620**
**GB-A-2 067 050**

**THE POST OFFICE ELECTRICAL ENGINEERS'
JOURNAL, vol. 72, no. 2, July 1979, pages
75-80, London, GB; W.G.T.JONES et al.:
"Principles of system X"**

**PATENTS ABSTRACTS OF JAPAN, vol. 6, no.
52 (E-100)930r, 7th April 1982; & JP - A - 56 165
483 (NIPPON DENKI K.K.) 19-12-1981**

**SYSTEMS TECHNOLOGY, no. 32, September
1979, pages 5-19, Liverpool, GB; A.S.PHILIP:
"The system X digital switching subsystem
(DSS)"**

(73) Proprietor: **THE PLESSEY COMPANY plc
Vicarage Lane
Ilford Essex, IG1 4AQ (GB)**

(72) Inventor: **Maddern, Thomas Slade
38 Cutlers Place
Colehill Wimborne Dorset (GB)**
Inventor: **Ansell, John William
8 North Road
Parkstone Poole Dorset (GB)**

(74) Representative: **Allen, Derek et al
The Plessey Company plc Intellectual Property
Department Vicarage Lane
Ilford Essex, IG1 4AQ (GB)**

(56) References cited:
**ELECTRONIC ENGINEERING, vol. 53, no. 659,
November 1981, pages 37-43, London, GB;
J.SMITH: "Designing with a digital line
interface controller"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method of controlling a digital line termination unit command interface for telecommunications exchanges.

The present invention finds application in modern telecommunication exchanges, an example of which is disclosed in an article in "The Post Office Electrical Engineers Journal", volume 72, No. 2, 1979 entitled Principles of System X. This article discusses the basic principles of the system X type telecommunications exchange and how they evolved. In particular, it discusses the development of digital switching, processor control and common channel signalling.

Modern telecommunication exchanges use a time-space-time switching network which is interfaced to the PCM line communication paths by way of a digital line termination unit.

The digital line termination unit terminates the communication paths and performs line associated functions such as alarm detection and insertion, error rate monitoring, alignment and conversion of bipolar line code to binary logic—compatible form and performs a number of switch-related operations. Some operations are related to the security duplication of the trunking, and the avoidance, detection and location of switch faults. Other operations are related to the use of 'spare' bits in the synchronisation channel, that is those bits which are undefined for frame recognition purposes and available as data bearers for network administration or control purposes. A more detailed description of the function of a digital line termination unit can be found in British Patent numbered 2063620B.

Because control information is sent to the digital line termination unit, which impacts on the security of the speech circuits, it becomes necessary for the digital line termination unit to ensure that it implements only valid sequences on its command interface. Two levels of protection are provided. The first level protects the command transport mechanism on each plane of the switch block individually, and the second level provides security of the command contents.

Accordingly, an aim of the present invention is to provide a method of controlling a digital line termination unit command interface which provides the necessary levels of protection.

According to the present invention there is provided a method of controlling a digital line termination unit command interface for telecommunications exchanges wherein control information is sent to the digital line termination unit, using PCM signalling techniques, characterised in that during each idle time slot of the PCM signal a synchronisation pattern is sent to the digital line termination unit, and a command code is preceded and followed by the synchronisation pattern and verified as a correct code when the preceding and following synchronisation patterns are determined valid by the digital line termination unit.

One method of performing the invention will now be described.

The digital line termination unit receives an 8 bit command on time slots 0—31. Bits 0 and 1 represent an identifier, bits 2—6 represent command/data and bit 7 represents parity for the transmitted "speech" data Tx.

Identifier bit

10 not used.

00 represents a command code.

01 represents a transmit, Tx channel address.

10 represents a receive, Rx channel address.

11 represents data.

The command code represented by bits 2—6 are as follows:—

| B6 | B5 | B4 | B3 | B2 | |
|----|----|----|----|----|--|
| 0 | 0 | 0 | 0 | 0 | not used. |
| 0 | 0 | 0 | 0 | 1 | Master Reset. |
| 0 | 0 | 0 | 1 | 0 | not used. |
| 0 | 0 | 0 | 1 | 1 | not used. |
| 0 | 0 | 1 | 0 | 0 | Lock data to plane 1. |
| 0 | 0 | 1 | 0 | 1 | Lock data to plane 2. |
| 0 | 0 | 1 | 1 | 0 | not used. |

2

**0 158 131**

| B6 | B5 | B4 | B3 | B2 | |
|----|----|----|----|----|---|
| 0 | 0 | 1 | 1 | 1 | Path check data insertion plane 1. |
| 0 | 1 | 0 | 0 | 0 | Path check data insertion plane 2. |
| 0 | 1 | 0 | 0 | 1 | Set alarm bit 6. |
| 0 | 1 | 0 | 1 | 0 | not used. |
| 0 | 1 | 0 | 1 | 1 | Loop back data plane 1. |
| 0 | 1 | 1 | 0 | 0 | Loop back data plane 2. |
| 0 | 1 | 1 | 0 | 1 | not used. |
| 0 | 1 | 1 | 1 | 0 | Set bit 0 status stream to selection 1. |
| 0 | 1 | 1 | 1 | 1 | Set bit 0 status stream to selection 2. |
| 1 | 0 | 0 | 0 | 0 | Set bit 0 status stream to selection 3. |
| 1 | 0 | 0 | 0 | 1 | not used. |
| 1 | 0 | 0 | 1 | 0 | not used. |
| 1 | 0 | 0 | 1 | 1 | Reset loop back data. |
| 1 | 0 | 1 | 0 | 0 | not used. |
| 1 | 0 | 1 | 0 | 1 | not used. |
| 1 | 0 | 1 | 1 | 0 | Reset alarm bit 6. |
| 1 | 0 | 1 | 1 | 1 | Reset path check data insertion plane 2. |
| 1 | 1 | 0 | 0 | 0 | Reset path check data insertion plane 1. |
| 1 | 1 | 0 | 0 | 1 | not used. |
| 1 | 1 | 0 | 1 | 0 | Reset data lock. |
| 1 | 1 | 0 | 1 | 1 | not used. |
| 1 | 1 | 1 | 0 | 0 | not used. |
| 1 | 1 | 1 | 0 | 1 | Synchronisation pattern. |
| 1 | 1 | 1 | 1 | 0 | not used. |
| 1 | 1 | 1 | 1 | 1 | not used. |

**0 158 131**

Master reset
This command resets the digital line termination unit into the 'normal' operational state. It combines the actions of the following commands:—

> Reset path check data
> insertion plane 1.
>
> Reset path check data
> insertion plane 2.
>
> Reset loop back data.
>
> Reset data lock.
>
> Set bit 0 status stream
> to selection 1.
>
> Reset bit 6.

Lock data to plane 1 (2)
This command locks the transmitted "speech" data Tx to plane 1 (2) and overrides a bias mechanism which selects one of the planes to the exclusion of the other to supply speech samples for transmission.

Path check data insertion plane 1 (2)
This command inserts path check data into the receive data stream on plane 1 or (2), for the channel addressed by the receive channel address register. The data is supplied from a path check data register.

Set alarm bit 6
This command causes the alarm bit 6 to be set by setting a status bit known as the line alarm change status bit.

Loop back data plane 1 (2)
This command loops the transmitted data back as received data for all channels on plane 1 or (2). Transmitted data for channel n will be returned to channel n+1 as received data. If data was being looped back on plane 2 (1), this action will be reset.

Set bit 0 status stream to selection 1 (2), (3)
This command causes selection 1 (2), (3) status to be sent back in the bit 0 status stream until a further select command is sent.

Reset loop back data
This command switches the supply of the receive data of both planes to the receive data output from an aligner used for synchronisation of incoming "speech" from the PCM line. The command resets a 'loop back data' command.

Reset alarm bit 6
This command unsets the alarm bit 6 unless an error status condition is present. It operates by unsetting the line alarm change status bit, and also resets a warning status bit if it is set.

Reset path check data insertion plane 1 (2)
This command switches off path check data insertion for plane 1 or (2).

Reset data lock
This command causes the selection of transmit data to be governed by the data bias and resets any lock data command.

Synchronisation pattern
This command causes no action to be taken by the digital line termination unit. It is used for verifying the command highway from each plane, and is transmitted when no information is to be sent to the digital line termination unit.

Transmit channel address
Bits 2—6 contain the channel address from which data will be extracted on path check. The data is extracted from planes and also after plane selection by the bias mechanism and time slot 0 synchronisation pattern insertion. The data may be read by selecting monitor data for bit 0 of the digital line termination unit

4

status. The transmit channel address sent may be read by selecting the check read data for bit 0 of the digital line termination unit status.

Receive channel address

Bits 2—6 will contain the channel address for which data is to be inserted when a path check command is operative. The receive channel address sent may be read by selecting the check read data for bit 0 of the digital line termination unit status.

Data

Bits 2—6 will contain data to be loaded into a path check data register as follows:—

| Bit 2 | Register bit 0 |
|---|---|
| 3 | 1 |
| 4 | 2 |
| 5 | 3 |
| 6 | parity |

At the same time that new data is being loaded into bits 0—3 of the data register, the original contents are shifted into bits 4—7 of the path check data register. This allows the path check data register to be loaded by two data transfers. Since the parity bit is loaded by every data transfer it is possible to control overall parity of the path check register for every data transfer.

The command interface sequences

Commands can be sent to the digital line termination unit which will interrupt the normal "speech" data flow. To maintain security of the data the digital line termination unit will only implement valid sequences of the command interface. Transmit and receive channel address and data do not require protection since they will only be active when the digital line termination unit has received a diagnostic command which makes use of these functions. To maintain security two levels of protection are provided.

The first level protects the command transport mechanism on each plane individually. The second level provides security of the command contents and the resultant actions. The second level is only applied to actual command codes sent to the digital line termination unit and no security is provided for transmit addresses, receive addresses and data, other than the ability to check read.

Command transport mechanism

The digital line termination unit has the ability to ignore a plane sending incorrect data. Protection is provided against misalignment of data and continuous output of a non-idle code. In the idle state the synchronisation pattern is sent in every time slot along with the "speech" data parity bit. This pattern gives at least three errors if it is misaligned. A command must be preceded and followed by a valid synchronisation pattern. Once an illegal sequence is detected the digital line termination unit will ignore the command highway on that plane for the duration of the current frame and the immediately following frame. At the beginning of the next enabled frame, the digital line termination unit will expect a legal sequence starting with a synchronisation pattern, and if this does not occur the digital line termination unit will treat the information as a new illegal sequence and inhibit that place for the current and following frame.

A legel sequence is defined as follows:—

| Time slot n | = | Sync. |
|---|---|---|
| Time slot n+1 | = | Command |
| Time slot n+2 | = | Sync. |

where

| Sync. | = | P1110100 |
|---|---|---|
| Command | = | Pxxxxxxx |
| P | = | "Speech" data parity |
| Data parity | = | 0 |
| | | 1 |
| X | = | 0 |
| | | 1 |

Command analysis

This validated command output from each plane is OR-ed to produce a single input into a command analyser. The first stage of command analysis will perform the same sequence validity checks that are performed on a per plane basis as described above under Command Transport Mechanism.

The Command contents are validated by further analysis, and the identifier field is used to steer further action as follows:—

**Command code**

Command codes are protected by a two element sequence. Firstly, the command code is sent normally, and secondly the command code bits are inverted. A timeout is also imposed on the sequence. The inverted bits must be sent within the same frame or the frame immediately following that in which the bits were sent normally. The legal sequence is as follows:—

| | | |
|---|---|---|
| Time slot n | = | Sync. |
| Time slot n+1 | = | P C code 00 |
| Time slot n+2 | = | Sync. |
| Time slot n+2+m | = | P $\overline{C}$ code 00 |
| Time slot n+3+m | = | Sync. |

where

| | | |
|---|---|---|
| C code | = | A Command Code |
| P | = | Parity |
| $\overline{C}$ code | = | All bits of C code are inverted. |
| 32>M>0 | | |

**Transmit channel address**

The five bits of the transmit channel address will be loaded without further checking. The legal sequence is as follows:—

| | | |
|---|---|---|
| Time slot n | = | Sync. |
| Time slot n+1 | = | P Tx add 01 |
| Time slot n+2 | = | Sync. |

where

| | | |
|---|---|---|
| Tx add | = | Transmit channel address |

**Receive channel address**

The five bits of the receive channel will be loaded without further checking. The legal sequence is as follows:—

| | | |
|---|---|---|
| Time slot n | = | Sync. |
| Time slot n+1 | = | P Rx add 10 |
| Time slot n+2 | = | Sync. |

where

| | | |
|---|---|---|
| Rx add | = | Receive channel address |

**Data**

The five bits of data will be loaded without further checking. The legal sequence is as follows:—

| | | |
|---|---|---|
| Time slot n | = | Sync. |
| Time slot n+1 | = | P Data 11 |
| Time slot n+2 | = | Sync. |

where

| | | |
|---|---|---|
| Data | = | Data bits |

**Claims**

1. A method of controlling a digital line termination unit command interface for telecommunications exchanges wherein control information is sent to the digital line termination unit, using PCM signalling techniques, characterised in that during each idle time slot of the PCM signal a synchronisation pattern is sent to the digital line termination unit, and a command code is preceded and followed by the synchronisation pattern and verified as a correct code when the preceding and following synchronisation patterns are determined valid by the digital line termination unit.

2. A method of controlling a digital line termination unit command interface as claimed in Claim 1 wherein the command code is sent in a first time slot and is sent in a subsequent time slot in inverted form, the subsequent time slot occurring in the same frame or the immediately following frame in which the first time slot occurred.

3. A method of controlling a digital line termination unit command interface as claimed in Claim 1 or 2 wherein the command code is verified by the following sequence:—

| | | |
|---|---|---|
| Time slot n | = | synchronisation pattern |
| Time slot n+1 | = | P C code 00 |
| Time slot n+2 | = | synchronisation pattern |
| Time slot n+2+m | = | P C code 00 |
| Time slot n+3+m | = | synchronisation pattern |

where

## 0 158 131

| | | |
|---|---|---|
| P | = | Parity bit |
| C code | = | Command code |
| $\overline{\text{C code}}$ | = | all bits of command code inverted |
| 32>m>0. | | |

### Patentansprüche

1. Eine Methode zur Steuerung einer digitalen Leitungsabschluss-Schnittstelle für Telekommunikationsvermittlungsämter, wobei Steuerungsinformation an die digital Leitungsabschluss-Schnittstelle mittels PCM Signalisierung übertragen wird, dadurch gekennzeichnet dass ein Synchronisierungsmuster während jedes unbenützten Timeslots des PCM-Signals an die digitale Leitungsabschluss-Einheit üb ertragen wird, und vor und nach einem Befehlskode ein Synchronisierungsmuster übertragen wird, welcher Befehlskode nur dann als ein korrekter Kode anerkannt wird, wenn die vorherigen und nachherigen Synchronisierungsmuster durch die digitale Leitungsabschluss-Einheit als gültig erkannt werden.

2. Eine Methode zur Steuerung einer digitalen Leitungsabschluss-Befehlsschnittstelle nach Anspruch 1, dadurch gekennzeichnet dass der Befehlskode während eines ersten Timeslots übertragen wird, und während eines späteren Timeslots in invertierter Form übertragen wird, wobei der spätere Timeslot sich im den selben oder in dem nächst folgenden Frame als der erste Timeslot befindet.

3. Eine Methode zur Steuerung einer digitalen Leitungsabschluss-Befehlsschnittstelle nach Anspruch 1, dadurch gekennzeichnet dass der Befehlskode durch folgende Sequenz verifiziert wird:—

| | | |
|---|---|---|
| Timeslot n | = | Synchronisiermuster |
| Timeslot n+1 | = | PC Kode 00 |
| Timeslot n+2 | = | Synchronisiermuster |
| Timeslot n+2+m | = | PC Kode 00 |
| Timeslot n+3+m | = | Synchronisiermister |

wobei

| | | |
|---|---|---|
| P | = | Paritätsbit |
| C Kode | = | Befehlskode |
| $\overline{\text{C Kode}}$ | = | Alle Bits des Befehlskode invertiert |
| 32>m>0. | | |

### Revendications

1. Procédé de commande d'un circuit d'interface de commande d'unité numérique de terminaison de ligne destiné à des centraux de télécommunications, dans lequel une information de commande est transmise à l'unité numérique de terminaison de ligne, à l'aide des techniques de signalisation MIC, caractérisé en ce que, pendant chaque tranche temporelle inactive du signal MIC, une configuration de synchronisation est transmise à l'unité numérique de terminaison de ligne, et un code de commande est précédé et est suivi par la configuration de synchronisation et est vérifié comme étant un code convenable lorsque les configurations précédente et suivante de synchronisation sont déterminées comme valides par l'unité numérique de terminaison de ligne.

2. Procédé de commande d'un circuit d'interface de commande d'unité numérique de terminaison de ligne selon la revendication 1, dans lequel le code de commande est transmis dans une première tranche temporelle et est transmis dans une tranche temporelle suivante sous forme inversée, la tranche temporelle suivante apparaissant dans le même bloc ou dans le bloc suivant immédiatement celui dans lequel se trouve la première tranche temporelle.

3. Procédé de commande d'un circuit d'interface de commande d'unité numérique de terminaison de ligne selon la revendication 1 ou 2, dans lequel le code de commande est vérifié par la séquence suivante:

| | | |
|---|---|---|
| Tranche de temps n | = | configuration de synchronisation |
| Tranche de temps n+1 | = | P C code 00 |
| Tranche de temps n+2 | = | Configuration de synchronisation |
| Tranche de temps n+2+m | = | P C code 00 |
| Tranche de temps n+3+m | = | Configuration de synchronisation |

avec

| | | |
|---|---|---|
| P | = | bit de parité |
| C code | = | Code de commande |
| $\overline{\text{C code}}$ | = | Tous les bits du code de commande sont inversés |
| 32>m>0. | | |